# EUROPEAN PATENT APPLICATION

(11) **EP 3 767 776 A1**
(43) Date of publication of application: **20.01.2021**
(21) Application number: 19186513.8
(22) Date of filing: 16.07.2019
(51) Int. Cl.: H02J 7/00, H02J 50/10, H04B 1/3888

(54) **PROTECTIVE APPARATUS FOR WIRELESS CHARGING**

(71) Applicant: Lee, Yen Kuang, New Taipei City (TW)
(72) Inventor: Lee, Yen Kuang, New Taipei City (TW)
(74) Representative: Melchior, Robin

(57) **Abstract**

A protective apparatus for wireless charging has a coil receiving portion (11), a protective-apparatus switch control circuit (211), an opposite-side coil receiving portion (13), a side portion (12), and a connection wire (001). The coil receiving portion (11) has a protective-apparatus first coil (C1) and a protective-apparatus second coil (C2). The protective-apparatus switch control circuit (211) is electrically connected to the protective-apparatus first coil (C1) and the protective-apparatus second coil (C2) . The opposite-side coil receiving portion (13) has a protective-apparatus third coil (C4). The side portion (12) is connected to the coil receiving portion (11) and the opposite-side coil receiving portion (13). The connection wire (001) is connected to the protective-apparatus third coil (C4) and the protective-apparatus switch control circuit (211).

## Description

### BACKGROUND

### 1. Field of the Invention

The present invention relates to a protective apparatus, and more particularly to a protective apparatus for wireless charging.

### 2. Description of the Related Art

A conventional protective apparatus, such as a leather case or a protective case, has only one function protecting an electronic device which is covered by the conventional protective apparatus. In the era with developed technology of wireless charging, the conventional protective apparatus, such as a leather case or a protective case, which only has the protective function, may not satisfy the need of the consumers. Especially, the user can only place the electronic device flat on a wireless charging dock for the electronic device to be wirelessly charged, such that the user can only watch the electronic device in an inconvenient body posture when the electronic device is being wirelessly charged.

### SUMMARY OF THE INVENTION

In order to overcome the problem of inconvenience for that user has to watch the electronic device when the electronic device is placed flat on the wireless charging dock for being wirelessly charged, an objective of the present invention is to provide a protective apparatus for wireless charging. The protective apparatus of the present invention may be put on the electronic device. When the electronic device covered in the protective apparatus of the present invention is wirelessly charged, the electronic device may be supported up by the protective apparatus of the present invention for the user to watch the electronic device in a comfortable posture.

The protective apparatus for wireless charging of the present invention comprises a coil receiving portion, a protective-apparatus switch control circuit, an opposite-side coil receiving portion, a side portion, and a connection wire. The coil receiving portion has a protective-apparatus first coil and a protective-apparatus second coil. The protective-apparatus switch control circuit is electrically connected to the protective-apparatus first coil and the protective-apparatus second coil. The opposite-side coil receiving portion has a protective-apparatus third coil. The side portion is connected to the coil receiving portion and the opposite-side coil receiving portion. The connection wire is connected to the protective-apparatus third coil and the protective-apparatus switch control circuit.

When the user wants to wirelessly charge the electronic device covered in the protective apparatus of the present invention, the user may put the electronic device covered in the protective apparatus of the present invention on a wireless charging device in a standable manner. When electromagnetic induction is generated between the protective-apparatus third coil of the protective apparatus and the wireless-charging-device charging coil of the wireless charging device, the protective-apparatus switch control circuit receives a wireless-charging-device induction input signal from the protective-apparatus third coil. Then the protective-apparatus switch control circuit would connect the protective-apparatus third coil to the protective-apparatus first coil to form a configuration of parallel connection of two coils, and break a parallel connection between the protective-apparatus second coil and the protective-apparatus first coil. When the protective-apparatus first coil has electromagnetic induction with an electronic-device charging coil of the electronic device, the electronic-device charging coil transmits a wireless-charging-device induction output signal to an electronic-device circuit board of the electronic device for the electronic-device circuit board to process electrical power, and such electrical power is transmitted to an electronic-device battery of the electronic device for charging the electronic-device battery. Hence, to wirelessly charge the electronic device in a standable manner is accomplished.

Besides, when the user wants to wirelessly charge the electronic device covered in the protective apparatus of the present invention in a laid-flat manner, the user may put the electronic device covered in the protective apparatus of the present invention flat on a wireless charging device. When electromagnetic induction is generated between the protective-apparatus second coil of the protective apparatus and the wireless-charging-device charging coil of the wireless charging device, the protective-apparatus switch control circuit receives a wireless-charging-device induction input signal from the protective-apparatus second coil. Then the protective-apparatus switch control circuit would connect the protective-apparatus second coil to the protective-apparatus first coil to form a configuration of parallel connection of two coils, and break a parallel connection between the protective-apparatus third coil and the protective-apparatus first coil. When the protective-apparatus first coil has electromagnetic induction with an electronic-device charging coil of the electronic device, the electronic-device charging coil transmits a wireless-charging-device induction output signal to an electronic-device circuit board of the electronic device for the electronic-device circuit board to process electrical power, such electrical power is transmitted to an electronic-device battery of the electronic device for charging the electronic-device battery. Hence, to wirelessly charge the electronic device in a laid-flat manner is accomplished.

### BRIEF DESCRIPTION OF THE DRAWINGS

Fig. 1 is a schematic view of a first embodiment of the protective apparatus of the present invention;
Fig. 2 is a schematic view of a second embodiment of the protective apparatus of the present invention;
Fig. 3 is a schematic view of a third embodiment of the protective apparatus of the present invention;
Fig. 4 is a schematic view of using the first embodiment of the protective apparatus of the present invention;
Fig. 5 is a schematic view of using the second embodiment of the protective apparatus of the present invention;
Fig. 6 is a schematic view of using the third embodiment of the protective apparatus of the present invention; and
Figs. 7A and 7B are flow charts explaining the application of the protective apparatus of the present invention.

### DETAILED DESCRIPTION OF THE INVENTION

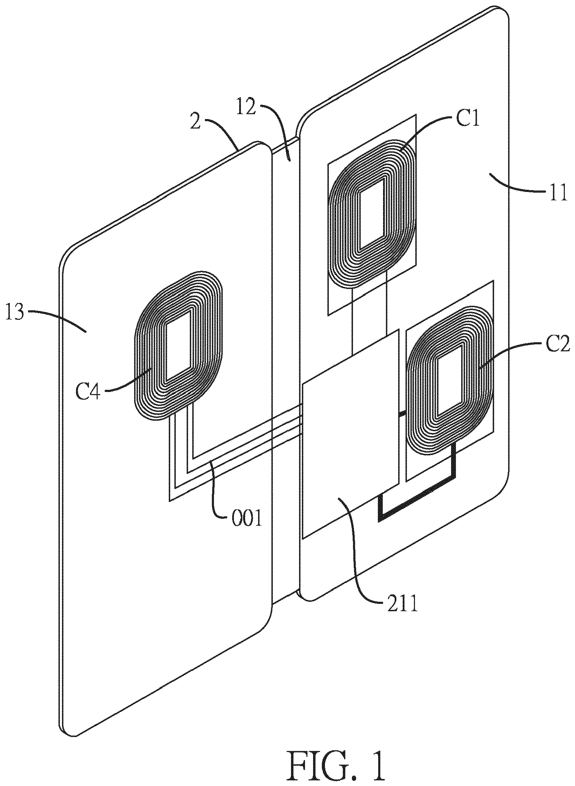

With reference to Fig. 1, Fig. 1 shows a first embodiment of a protective apparatus 2 of the present invention. The protective apparatus 2 for wireless charging, as shown in Fig. 1, comprises a coil receiving portion 11, a side portion 12, an opposite-side coil receiving portion 13, a connection wire 001, and a protective-apparatus switch control circuit 211. The coil receiving portion 11, the opposite-side coil receiving portion 13, and the side portion 12 may be, but are not limited to be, formed as a standable leather case. The coil receiving portion 11 has a protective-apparatus first coil C1 and a protective-apparatus second coil C2. The opposite-side coil receiving portion 13 has a protective-apparatus third coil C4. The side portion 12 is connected to the coil receiving portion 11 and the opposite-side coil receiving portion 13. The protective-apparatus switch control circuit 211 is mounted in the coil receiving portion 11. The connection wire 001 is mounted in the coil receiving portion 11, the side portion 12, and the opposite-side coil receiving portion 13. The connection wire 001 is electrically connected to the protective-apparatus switch control circuit 211. The connection wire 001 is electrically connected to the protective-apparatus third coil C4. The protective-apparatus first coil C1 is electrically connected to the protective-apparatus switch control circuit 211. The protective-apparatus second coil C2 is electrically connected to the protective-apparatus switch control circuit 211. For example, the protective-apparatus first coil C1 and the protective-apparatus second coil C2 may be electrically connected to the protective-apparatus switch control circuit 211 through electrical conductor wires. The protective-apparatus first coil C1 may be connected to the protective-apparatus second coil C2 via the protective-apparatus switch control circuit 211. The protective-apparatus switch control circuit 211 may control two coils, such as the protective-apparatus first coil C1 and the protective-apparatus second coil C2, to be connected to each other in parallel or in series or disconnected from each other, but not to be overlapped to each other. The protective-apparatus first coil C1 may be connected to the connection wire 001 and the protective-apparatus third coil C4 via the protective-apparatus switch control circuit 211. The protective-apparatus switch control circuit 211 may control two coils, such as the protective-apparatus first coil C1 and the protective-apparatus third coil C4, to be connected to each other in parallel or in series or disconnected from each other.

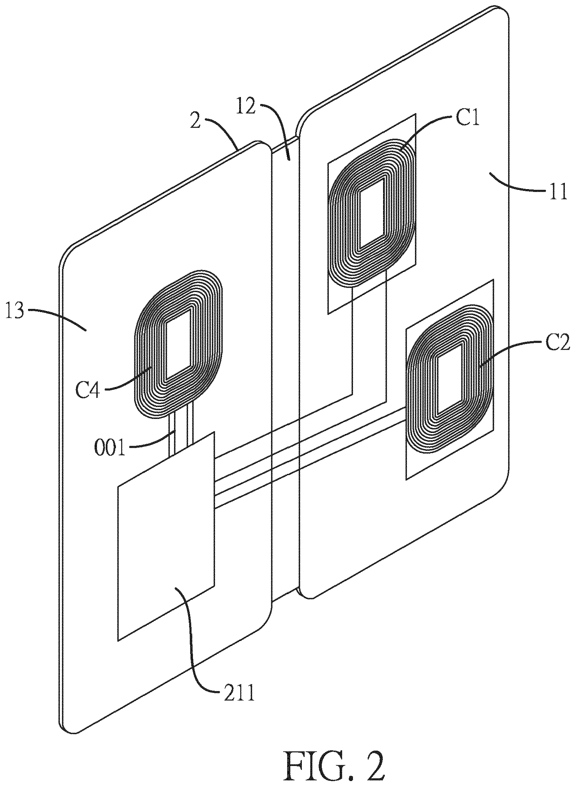

With reference to Fig. 2, Fig. 2 shows a second embodiment of the protective apparatus of the present invention. The protective apparatus 2 for wireless charging, as shown in Fig. 2, comprises a coil receiving portion 11, a side portion 12, an opposite-side coil receiving portion 13, a connection wire 001, and a protective-apparatus switch control circuit 211. The coil receiving portion 11, the opposite-side coil receiving portion 13, and the side portion 12 may be, but are not limited to be, formed as a standable leather case. The coil receiving portion 11 has a protective-apparatus first coil C1 and a protective-apparatus second coil C2. The opposite-side coil receiving portion 13 has a protective-apparatus third coil C4. The side portion 12 is connected to the coil receiving portion 11 and the opposite-side coil receiving portion 13. The protective-apparatus switch control circuit 211 is mounted in the opposite-side coil receiving portion 13. The connection wire 001 is mounted in the opposite-side coil receiving portion 13. The connection wire 001 and the protective-apparatus switch control circuit 211 are connected to each other. The connection wire 001 and the protective-apparatus third coil C4 are connected to each other. The protective-apparatus first coil C1 may be connected to the protective-apparatus second coil C2 via the protective-apparatus switch control circuit 211. For example, the protective-apparatus first coil C1 and the protective-apparatus second coil C2 may be electrically connected to the protective-apparatus switch control circuit 211 through electrical conductor wires. The protective-apparatus switch control circuit 211 may control two coils, such as the protective-apparatus first coil C1 and the protective-apparatus second coil C2, to be connected to each other in parallel or in series or disconnected from each other, but not to be overlapped to each other. The protective-apparatus first coil C1 may be connected to the connection wire 001 and the protective-apparatus third coil C4 via the protective-apparatus switch control circuit 211. The protective-apparatus switch control circuit 211 may control two coils, such as the protective-apparatus first coil C1 and the protective-apparatus third coil C4, to be connected to each other in parallel or in series or disconnected from each other.

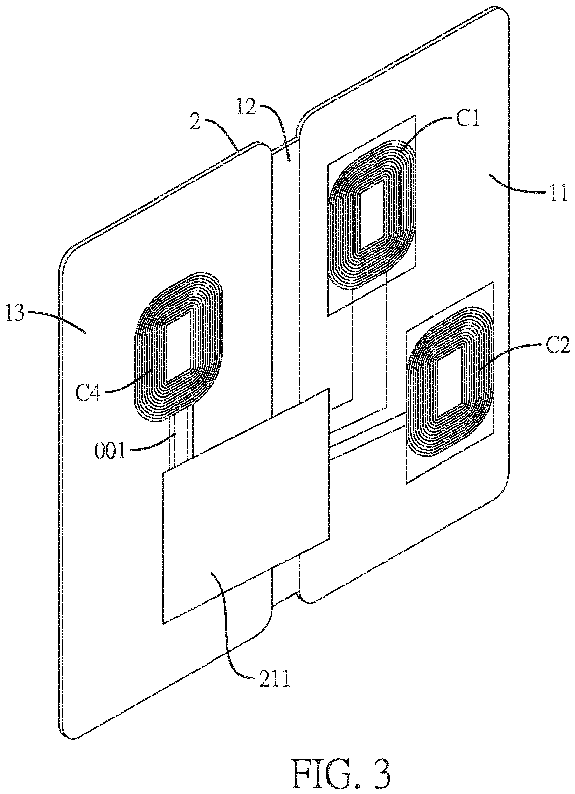

With reference to Fig. 3, Fig. 3 shows a third embodiment of the protective apparatus of the present invention. The protective apparatus 2 for wireless charging, as shown in Fig. 3, comprises a coil receiving portion 11, a side portion 12, an opposite-side coil receiving portion 13, a connection wire 001, and a protective-apparatus switch control circuit 211. The coil receiving portion 11, the opposite-side coil receiving portion 13, and the side portion 12 may be, but are not limited to be, formed as a standable leather case. The coil receiving portion 11 has a protective-apparatus first coil C1 and a protective-apparatus second coil C2. The opposite-side coil receiving portion 13 has a protective-apparatus third coil C4. The side portion 12 is connected to the coil receiving portion 11 and the opposite-side coil receiving portion 13. The protective-apparatus switch control circuit 211 is mounted in the opposite-side coil receiving portion 13, the coil receiving portion 11, and the side portion 12. The connection wire 001 is mounted in the opposite-side coil receiving portion 13. The connection wire 001 and the protective-apparatus switch control circuit 211 are connected to each other. The connection wire 001 and the protective-apparatus third coil C4 are connected to each other. The protective-apparatus first coil C1 is electrically connected to the protective-apparatus switch control circuit 211. The protective-apparatus second coil C2 is electrically connected to the protective-apparatus switch control circuit 211. For example, the protective-apparatus first coil C1 and the protective-apparatus second coil C2 may be electrically connected to the protective-apparatus switch control circuit 211 through electrical conductor wires. The protective-apparatus first coil C1 may be connected to the protective-apparatus second coil C2 via the protective-apparatus switch control circuit 211. The protective-apparatus switch control circuit 211 may control two coils, such as the protective-apparatus first coil C1 and the protective-apparatus second coil C2, to be connected to each other in parallel or in series or disconnected from each other, but not to be overlapped to each other. The protective-apparatus first coil C1 may be connected to the connection wire 001 and the protective-apparatus third coil C4 via the protective-apparatus switch control circuit 211. The protective-apparatus switch control circuit 211 may control two coils, such as the protective-apparatus first coil C1 and the protective-apparatus third coil C4, to be connected to each other in parallel or in series or disconnected from each other.

As mentioned above, the protective-apparatus first coil C1 and the protective-apparatus second coil C2 may be disposed at different positions. For example, with reference to Figs. 1-3, the protective-apparatus first coil C1 may be disposed at a first position in the coil receiving portion 11. The protective-apparatus second coil C2 may be disposed at a second position in the coil receiving portion 11. The first position and the second position are different or separate from each other. Besides, for the purpose of shielding metal and improving magnetic conductivity, magnetic materials may be added to the protective-apparatus first coil C1, the protective-apparatus second coil C2, and the protective-apparatus third coil C4. In addition, the impedance matching feature and coupling coefficients for the protective-apparatus first coil C1, the protective-apparatus second coil C2, and the protective-apparatus third coil C4 are adjustable in accordance with connections of passive components, such as capacitors, inductors, or resistors, connected in parallel or in series.

The protective-apparatus switch control circuit 211 may be mounted in the coil receiving portion 11 (as shown in Fig. 1) or in the opposite-side coil receiving portion 13 (as shown in Fig. 2). In other embodiments, the protective-apparatus switch control circuit 211 may be mounted in the side portion 12. Besides, the protective-apparatus switch control circuit 211 may be mounted in two different portions or multiple portions of the coil receiving portion 11, the opposite-side coil receiving portion 13, and the side portion 12. For example, the protective-apparatus switch control circuit 211 may be mounted in both the coil receiving portion 11 and the side portion 12, in both the side portion 12 and the opposite-side coil receiving portion 13, or in the coil receiving portion 11, the side portion 12, and the opposite-side coil receiving portion 13 (as shown in Fig. 3).

The connection wire 001 may be, but is not to, a conductor. For example, the connection wire 001 may be a flexible flat cable (FFC), a multi-core flat copper cable, or any electrical conductor. The connection wire 001 is connected to the protective-apparatus third coil C4 and the protective-apparatus switch control circuit 211. The connection wire 001 may be mounted in the opposite-side coil receiving portion 13 (as shown in Figs. 2 and 3). In other embodiments, the connection wire 001 may be mounted in the coil receiving portion 11 or in the side portion 12. Besides, as shown in Fig. 1, the connection wire 001 may be mounted in two different portions or multiple portions of the coil receiving portion 11, the opposite-side coil receiving portion 13, and the side portion 12. For example, the connection wire 001 may be mounted in both the coil receiving portion 11 and the side portion 12, in both the side portion 12 and the opposite-side coil receiving portion 13, or in the coil receiving portion 11, the side portion 12, and the opposite-side coil receiving portion 13.

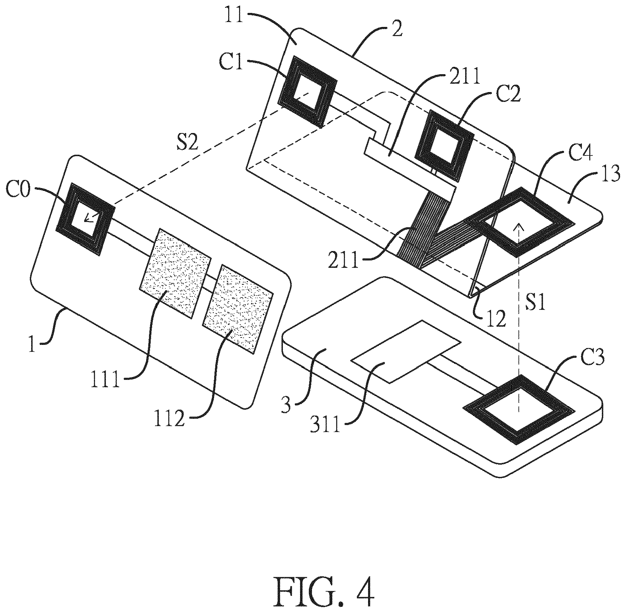

With reference to Fig. 4, Fig. 4 is a system explanation for the first embodiment of the present invention. The case type of the protective apparatus for wireless charging, as shown in Fig. 4, may be a back-flip standable leather case. For example, the coil receiving portion 11, the opposite-side coil receiving portion 13, and the side portion 12 may be formed as a back-flip standable leather case. A wireless charging device 3 has a wireless-charging-device charging coil C3 and a wireless-charging-device circuit 311. The wireless-charging-device circuit 311 provides electricity to the wireless-charging-device charging coil C3.

With reference to Fig. 4, when electromagnetic induction is generated between the protective-apparatus third coil C4 of the protective apparatus 2 and the wireless-charging-device charging coil C3 of the wireless charging device 3, the protective-apparatus switch control circuit 211 receives a wireless-charging-device induction input signal S1 from the protective-apparatus third coil C4. Then the protective-apparatus switch control circuit 211 would connect the protective-apparatus third coil C4 to the protective-apparatus first coil C1 to form a configuration of parallel connection of two coils, and break a parallel connection between the protective-apparatus second coil C2 and the protective-apparatus first coil C1. The wireless-charging-device induction input signal S1 is transmitted to the protective-apparatus first coil C1 via the protective-apparatus third coil C4. By having electromagnetic induction with an electronic-device charging coil C0 of an electronic device 1, the protective-apparatus first coil C1 transmits a wireless-charging-device induction output signal S2 to the electronic device 1 through the electronic-device charging coil C0. After the electronic device 1 transmits it to an electronic-device circuit board 111 to process electrical power, such electrical power is transmitted to an electronic-device battery 112 for charging the electronic-device battery 112.

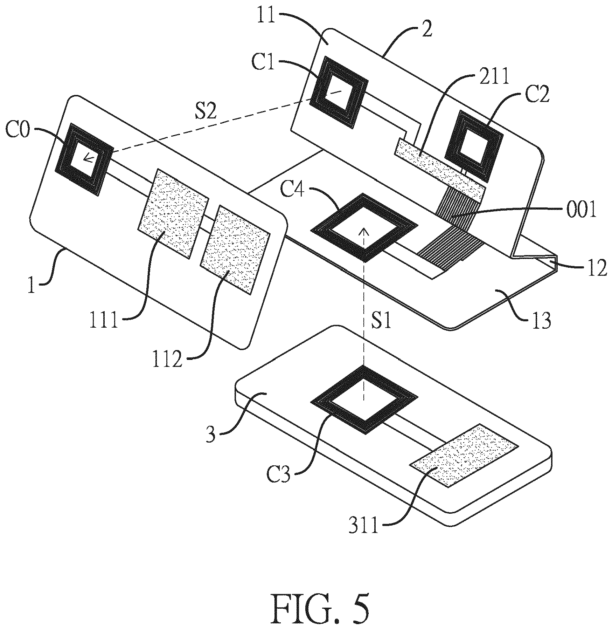

With reference to Fig. 5, Fig. 5 is a system explanation for the second embodiment of the present invention. The case type of the protective apparatus for wireless charging, as shown in Fig. 5, may be a foldable standable leather case. For example, the coil receiving portion 11, the opposite-side coil receiving portion 13, and the side portion 12 may be formed as a foldable standable leather case. A wireless charging device 3 has a wireless-charging-device charging coil C3 and a wireless-charging-device circuit 311. The wireless-charging-device circuit 311 provides electricity to the wireless-charging-device charging coil C3.

With reference to Fig. 5, when electromagnetic induction is generated between the protective-apparatus third coil C4 of the protective apparatus 2 and the wireless-charging-device charging coil C3 of the wireless charging device 3, the protective-apparatus switch control circuit 211 receives a wireless-charging-device induction input signal S1 from the protective-apparatus third coil C4. Then the protective-apparatus switch control circuit 211 would connect the protective-apparatus third coil C4 to the protective-apparatus first coil C1 to form a configuration of parallel connection of two coils, and break a parallel connection between the protective-apparatus second coil C2 and the protective-apparatus first coil C1. The wireless-charging-device induction input signal S1 is transmitted to the protective-apparatus first coil C1 via the protective-apparatus third coil C4. By having electromagnetic induction with an electronic-device charging coil C0, the protective-apparatus first coil C1 transmits a wireless-charging-device induction output signal S2 to an electronic device 1 through the electronic-device charging coil C0. After the electronic device 1 transmits it to an electronic-device circuit board 111 to process electrical power, such electrical power is transmitted to an electronic-device battery 112 for charging the electronic-device battery 112.

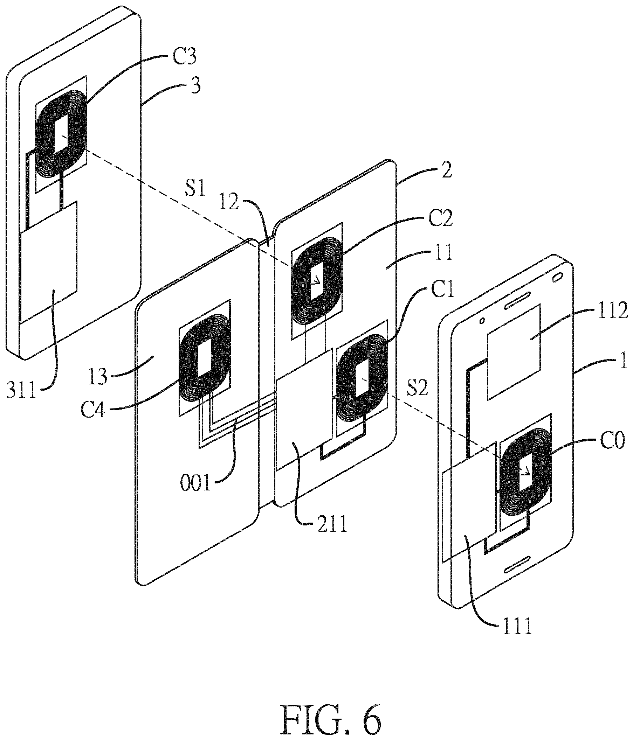

With reference to Fig. 6, Fig. 6 is a system explanation for the third embodiment of the present invention. The protective apparatus 2 for wireless charging of the present invention is wirelessly charged when the leather case is placed flat on a wireless charging device 3. The wireless charging device 3 has a wireless-charging-device charging coil C3 and a wireless-charging-device circuit 311. The wireless-charging-device circuit 311 provides electricity to the wireless-charging-device charging coil C3.

With reference to Fig. 6, when electromagnetic induction is generated between the protective-apparatus second coil C2 of the protective apparatus 2 and the wireless-charging-device charging coil C3 of the wireless charging device 3, the protective-apparatus switch control circuit 211 receives a wireless-charging-device induction input signal S1 from the protective-apparatus second coil C2. Then the protective-apparatus switch control circuit 211 would connect the protective-apparatus second coil C2 to the protective-apparatus first coil C1 to form a configuration of parallel connection of two coils, and break a parallel connection between the protective-apparatus third coil C4 and the protective-apparatus first coil C1. The wireless-charging-device induction input signal S1 is transmitted to the protective-apparatus first coil C1 via the protective-apparatus second coil C2. By having electromagnetic induction with an electronic-device charging coil C0, the protective-apparatus first coil C1 transmits a wireless-charging-device induction output signal S2 to an electronic device 1 through the electronic-device charging coil C0. After the electronic device 1 transmits it to an electronic-device circuit board 111 to process electrical power, such electrical power is transmitted to an electronic-device battery 112 for charging the electronic-device battery 112.

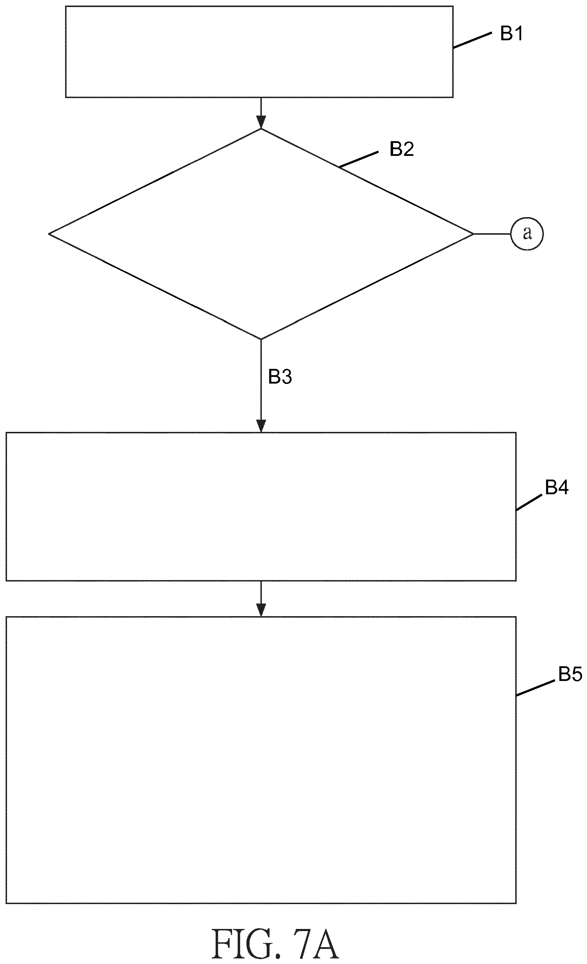

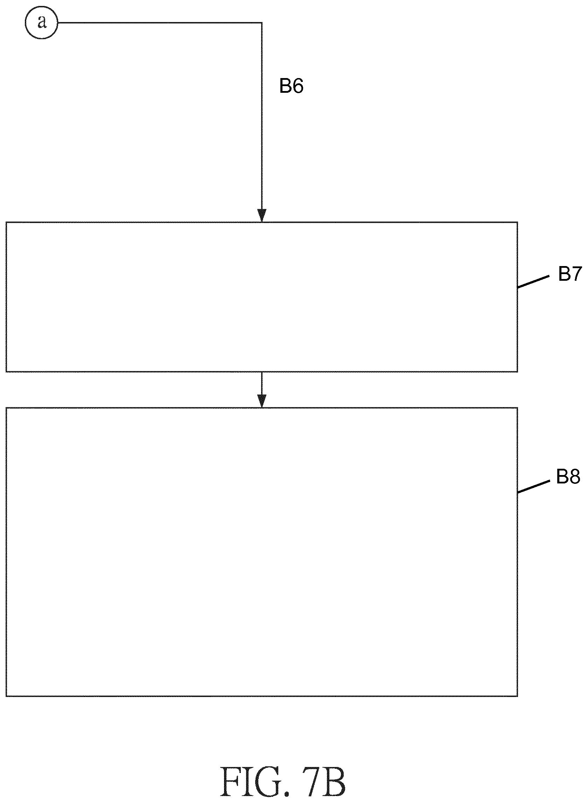

With reference to Figs. 7A and 7B, Figs. 7A and 7B are flow charts explaining the application of the protective apparatus of the present invention. When a user wants to charge an electronic device 1 and the protective apparatus 2 covering the electronic device 1 is laid on the wireless charging device 3, the protective-apparatus switch control circuit 211 would receive a wireless-charging-device induction input signal S1 and further determine whether the wireless-charging-device induction input signal S1 is received from the protective-apparatus second coil C2 or the protective-apparatus third coil C4. When determining that the wireless-charging-device induction input signal S1 is received from the protective-apparatus third coil C4, the protective-apparatus switch control circuit 211 would connect the protective-apparatus third coil C4 to the protective-apparatus first coil C1 to form a configuration of parallel connection of two coils, and break a parallel connection between the protective-apparatus second coil C2 and the protective-apparatus first coil C1. The wireless-charging-device induction input signal S1 is transmitted to the protective-apparatus first coil C1 via the protective-apparatus third coil C4. By having electromagnetic induction with an electronic-device charging coil C0, the protective-apparatus first coil C1 transmits a wireless-charging-device induction output signal S2 to an electronic device 1 through the electronic-device charging coil C0. After the electronic device 1 transmits it to an electronic-device circuit board 111 to process electrical power, such electrical power is transmitted to an electronic-device battery 112 for charging the electronic-device battery 112.

When determining that the wireless-charging-device induction input signal S1 is received from the protective-apparatus second coil C2, the protective-apparatus switch control circuit 211 would connect the protective-apparatus second coil C2 to the protective-apparatus first coil C1 to form a configuration of parallel connection of two coils, and break a parallel connection between the protective-apparatus third coil C4 and the protective-apparatus first coil C1. The wireless-charging-device induction input signal S1 is transmitted to the protective-apparatus first coil C1 via the protective-apparatus second coil C2. By having electromagnetic induction with an electronic-device charging coil C0, the protective-apparatus first coil C1 transmits a wireless-charging-device induction output signal S2 to an electronic device 1 through the electronic-device charging coil C0. After the electronic device 1 transmits it to an electronic-device circuit board 111 to process electrical power, such electrical power is transmitted to an electronic-device battery 112 for charging the electronic-device battery 112.

The embodiments as mentioned above are described via figures and descriptions for representing the protective apparatus of the present invention only. It is to be noted that the embodiments are only for demonstrating that the embodiments are feasible in practice, but not to limit the patent scope of the present invention.

### TEXT IN THE DRAWINGS:

In Fig. 7A:
B1 Putting the protective apparatus covering the electronic device on the wireless charging device.
B2 The protective-apparatus switch control circuit receives the wireless-charging-device induction signal from the protective-apparatus second coil or the protective-apparatus third coil.
B3 Receiving the wireless-charging-device induction input signal from the protective-apparatus third coil
B4 The protective-apparatus switch control circuit connects the protective-apparatus third coil to the protective-apparatus first coil to form a configuration of parallel connection of two coils, and break a parallel connection between the protective-apparatus second coil and the protective-apparatus first coil.
B5 The wireless-charging-device induction input signal is transmitted to the protective-apparatus first coil via the protective-apparatus third coil. When the protective-apparatus first coil has electromagnetic induction with an electronic-device charging coil of the electronic device, the electronic-device charging coil transmits a wireless-charging-device induction output signal to an electronic-device circuit board of the electronic device for the electronic-device circuit board to process electricity signal, such electricity signal is transmitted to an electronic-device battery of the electronic device for charging the electronic-device battery.

In fig. 7B:
B6 Receiving the wireless-charging-device induction input signal from the protective-apparatus second coil.
B7 The protective-apparatus switch control circuit connects the protective-apparatus second coil to the protective-apparatus first coil to form a configuration of parallel connection of two coils, and break a parallel connection between the protective-apparatus third coil and the protective-apparatus first coil.
B8 The wireless-charging-device induction input signal is transmitted to the protective-apparatus first coil via the protective-apparatus second coil. When the protective-apparatus first coil has electromagnetic induction with an electronic-device charging coil of the electronic device, the electronic-device charging coil transmits a wireless-charging-device induction output signal to an electronic-device circuit board of the electronic device for the electronic-device circuit board to process electricity signal, such electricity signal is transmitted to an electronic-device battery of the electronic device for charging the electronic-device battery.

## Claims

1. A protective apparatus for wireless charging, **characterized in that** the protective apparatus (2) comprises:
a coil receiving portion (11) having a protective-apparatus first coil (C1) and a protective-apparatus second coil (C2);
a protective-apparatus switch control circuit (211) electrically connected to the protective-apparatus first coil (C1) and the protective-apparatus second coil (C2);
an opposite-side coil receiving portion (13) having a protective-apparatus third coil (C4);
a side portion (12) connected to the coil receiving portion (11) and the opposite-side coil receiving portion (13); and
a connection wire (001) connected to the protective-apparatus third coil (C4) and the protective-apparatus switch control circuit (211).

2. The protective apparatus as claimed in claim 1, wherein the protective-apparatus switch control circuit (211) controls the protective-apparatus first coil (C1) and the protective-apparatus second coil (C2) to be connected to each other in parallel or in series or disconnected from each other.

3. The protective apparatus as claimed in claim 1, wherein the protective-apparatus switch control circuit (211) controls the protective-apparatus first coil (C1) and the protective-apparatus third coil (C4) to be connected to each other in parallel or in series or disconnected from each other.

4. The protective apparatus as claimed in claim 1, wherein the protective-apparatus first coil (C1) and the protective-apparatus second coil (C2) are not overlapped to each other.

5. The protective apparatus as claimed in claim 1, wherein the protective-apparatus switch control circuit (211) is mounted in the coil receiving portion (11).

6. The protective apparatus as claimed in claim 1, wherein the protective-apparatus switch control circuit (211) is mounted in the opposite-side coil receiving portion (13).

7. The protective apparatus as claimed in claim 1, wherein the protective-apparatus switch control circuit (211) is mounted in the side portion (12).

8. The protective apparatus as claimed in claim 1, wherein the connection wire (001) is an electrical conductor.

9. The protective apparatus as claimed in claim 1, wherein the protective-apparatus first coil (C1) and the protective-apparatus second coil (C2) are disposed at different positions.

10. The protective apparatus as claimed in claim 1, wherein the protective-apparatus switch control circuit (211) is mounted in multiple portions of the coil receiving portion (11), the opposite-side coil receiving portion (13), and the side portion (12).

11. The protective apparatus as claimed in claim 1, wherein the protective-apparatus switch control circuit (211) is mounted in two different portions of the coil receiving portion (11), the opposite-side coil receiving portion (13), and the side portion (12).

12. The protective apparatus as claimed in claim 1, wherein the coil receiving portion (11), the opposite-side coil receiving portion (13), and the side portion (12) are formed as a leather case.

13. The protective apparatus as claimed in claim 1, wherein the connection wire (001) is mounted in multiple portions of the coil receiving portion (11), the opposite-side coil receiving portion (13), and the side portion (12) .

14. The protective apparatus as claimed in claim 1, wherein the connection wire (001) is mounted in two different portions of the coil receiving portion (11), the opposite-side coil receiving portion (13), and the side portion (12).

15. The protective apparatus as claimed in claim 1, wherein the connection wire (001) is mounted in the coil receiving portion (11).

16. The protective apparatus as claimed in claim 1, wherein the connection wire (001) is mounted in the opposite-side coil receiving portion (13).

17. The protective apparatus as claimed in claim 1, wherein the connection wire (001) is mounted in the side portion (12).
